# EUROPEAN PATENT APPLICATION

(11) **EP 2 671 763 A1**
(43) Date of publication of application: **11.12.2013**
(21) Application number: 12004366.6
(22) Date of filing: 08.06.2012
(51) Int. Cl.: B60R 21/239

(54) **Airbag module with an active ventilation device**

(71) Applicant: Autoliv Development AB, 44783 Vårgårda (SE)
(72) Inventor: Karszt, Norbert, 85716 Lohhof (DE)
(74) Representative: Schön, Thilo

(57) **Abstract**

An airbag module is described. The airbag module comprises a flexible airbag (22) enclosing at least one chamber (23) being in fluid connection to an inflator (26) and an active ventilation device (30). This active ventilation device shows a vent part (32) with an opening (33), a sealing which closes the opening in an initial state at least partially, and an electrically triggered actuator, especially a pyro-technically driven actuator (36), connected to the vent part (32). This electrically triggered actuator acts on the sealing upon receipt of a signal such that the sealing is at least partially destroyed or removed from the opening (33) so that the active ventilation device (30) comes to an open ventilation state. In order to provide such an airbag module with an active ventilation device being designed such that it is ideal for the use in a pedestrian airbag module, the active ventilation device (30) is mounted to the flexible airbag (22) (Fig. 1).

## Description

The use of airbag modules is widespread in today's automotive technology. Airbag modules generally consist of a flexible airbag which is mostly made of woven plastic material and encloses at least one chamber, and an inflator, mostly a gas generator, which is in fluid connection to said chamber.

In most applications the airbag module must show at least one vent, so that gas can escape from the chamber when a person hits the flexible airbag. Without such a vent the person would simply bounce back from the airbag and no energy could be dissipated. In the simplest case, the vent is only a hole in the flexible airbag, such that the vent is permanently open.

A little more complex is the use of a vent that is closed in the initial state and open when the pressure inside the chamber exceeds a predetermined value. This can for example be achieved by closing the vent by a tear seam.

It is also known to use vents at the airbag that are connected to the housing or the gas generator of the airbag module by means of a tether such that the vent is closed or throttled as long as the tether is connected to the vent and to the housing / to the gas generator. A release mechanism is provided such that the tether is disconnected from the housing upon receipt of an electrical signal. Such an airbag module is for example described in EP 1 418 093 B1. A drawback of this solution is that it is difficult to achieve that the vent is completely closed during inflation of the airbag which is desired in some applications. Further, the use of inner tethers make the manufacture of the airbag rather labour intensive. Also, it can be difficult to locate the vent remote from the housing.

It is further known to use an active ventilation device which comprises an opening, a sealing which closes this opening in an initial state and an electrically triggered actuator that acts on the sealing upon receipt of a signal such that the sealing is destroyed or removed from the opening. Such an active ventilation device has the advantage that the timing when the active ventilation device opens can be precisely be triggered via an electric signal and that no inner tethers are needed. Such an airbag module is for example shown in DE 102 05 699 A1.

From DE 43 27 098 C2 it known to provide a electrically triggered, pyrotechnically driven actuator that breaks a seal after receiving an electric signal. The breaking of this seal is used to discharge stored pressurised gas into the chamber of an airbag.

At present, most airbag modules used in the automotive technology serve for the protection of the passengers of the vehicle. But since several years so-called pedestrian airbag modules are discussed - for example in the patent literature - that serve for the protection of a pedestrian being involved in an accident with a motor vehicle. A generic pedestrian airbag module is described for example in JP 2006-219046. The first such pedestrian airbag module was introduced into the marked recently.

Such pedestrian airbag modules usually need a rather large airbag, since it is often necessary to cover basically the whole windscreen. Because of this large volume of the pedestrian airbag it is desired that no gas is lost during inflation in order to deploy the airbag quickly.

Starting from this, the invention sets itself the problem to provide an airbag module with an active ventilation device being designed such that it is ideal for the use in an pedestrian airbag module.

As in other types of airbags too, the use of an electrically triggered active ventilation device with a sealing has the advantage that during the deployment of the airbag no gas can escape from the chamber such that a quick deployment of the airbag is possible and that the venting can be started with a precise timing. But, especially in the field of pedestrian airbags the use of an active ventilation device coupled to the housing of the airbag module has several disadvantages: On the one hand, in the case of a pedestrian airbag the diameter of the hole of the ventilation device usually needs to be quite large with a preferred diameter of 40 mm or even more. It can be difficult to implement such a rather large opening into a housing due to geometrical reasons. Further, due to the size of an airbag of a pedestrian airbag module, it is possible that a gas flow back to the housing is throttled to a large extent by a body part of the pedestrian hitting the airbag. In this case the airbag would remain harder as it should. Finally, it can happen that the pedestrian hits the airbag at an early time when the inflator still exhausts gas into the chamber of the airbag. In this case the venting through the housing is inhibited by the gas stream coming from the inflator.

The airbag module comprises a flexible airbag enclosing at least one chamber being in fluid connection to an inflator and an active ventilation device. This active ventilation device comprises a vent part having an opening and a sealing which closes the opening in an initial state at least partially, and an electrically triggered actuator mounted to said vent part and acting on the sealing upon receipt of an electrical signal such that the sealing is destroyed or removed from the opening so that the active ventilation device comes to an open ventilation state.

According to the invention, the active ventilation device is mounted to the flexible airbag, such that it deploys with the airbag. This has the advantage that the active ventilation device can be positioned such that only short gas flow paths to the opening are necessary. A further advantage is that openings with a large diameter can be realised easily. Preferably, the actuator of the active ventilation device is pyrotechnically driven. This makes it possible to design the active ventilation device with a relatively low mass which is a big advantage, since it deploys together with the airbag.

Preferably, the actuator comprises a piston portion that moves away from the housing of the actuator in an axial movement on activation of the actuator. In order to achieve a rather flat geometry of the active ventilation device, this axial movement of the piston portion is preferably basically parallel to the opening. This means of course that the movement of the piston portion is also parallel to the sealing. In order to transmit the force from the piston portion to the sealing, it is preferred that a force transmitter element protrudes from this sealing.

The vent part and the sealing preferably form a one-pieced plastic part comprising a collar encircling the opening and a sealing portion closing the opening in the initial state. This makes the ventilation device both: Cost effective in manufacture and gas tight in the initial state. The actuator can be clipped onto and/or glued to the vent part.

Further preferred embodiments and advantages result from the sub-claims and from the preferred embodiment described.

The invention will now be explained in detail in view of the accompanying figures. The figures show:
- Figure 1: A schematic representation of the front of a motor vehicle with a pedestrian airbag module, and a pedestrian at a time right before the vehicle hits the pedestrian,
- Figure 2: what is shown in Figure 1 at a later point in time,
- Figure 3: the two elements of an active ventilation device as it is used in the airbag module of Figures 1 and 2,
- Figure 4: a cut through the pyrotechnically driven actuator of Figure 2 in its initial state,
- Figure 5: the pyrotechnically driven actuator of Figure 4 after its activation,

- Figure 6: the active ventilation device which is completely mounted and attached to the airbag,
- Figure 7: a sectional view taken along line A-A in Figure 6,
- Figure 8: what is shown in Figure 6 after activation of the pyrotechnically driven actuator, and
- Figure 9: an active ventilation device which is basically designed as the one shown in Figures 3 to 8 in a perspective view.

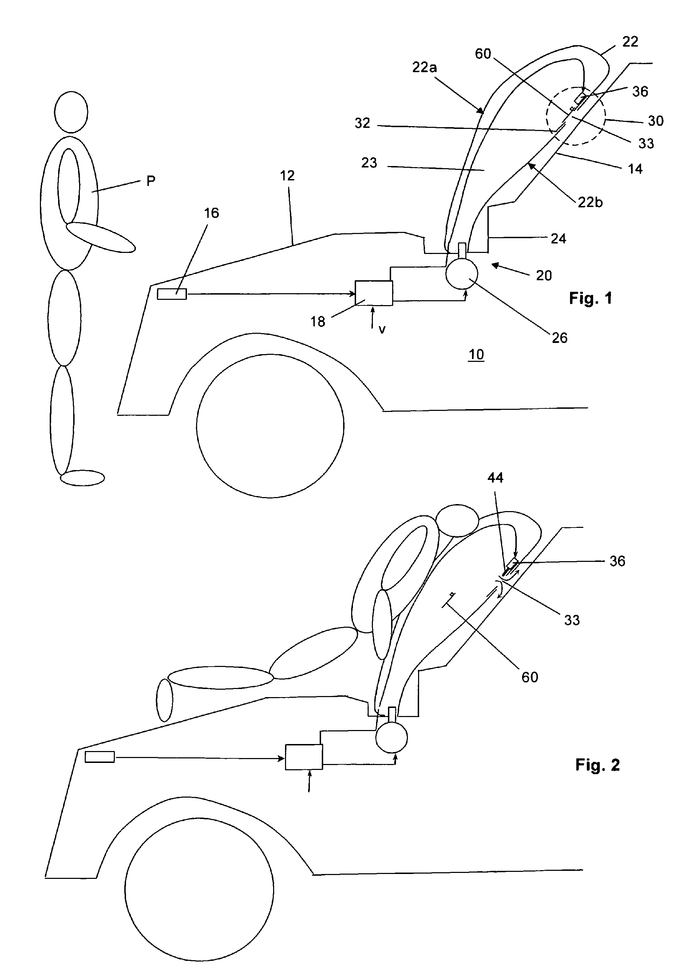

Figure 1 shows the front of a vehicle in a very schematic sectional view. This vehicle is equipped with a pedestrian airbag module 20 which is comprised of an airbag 22 for covering the windscreen 14 and/or the A-pillars of the vehicle, a housing 24 into which the airbag 22 is initially folded and an inflator 26, for example a gas generator. The housing 24 of the airbag module 20 is located at a rear part of the bonnet 12 of the vehicle 10 right in front of the windscreen 14. A sensor 16 - here a proximity sensor - is provided which is in communication to a controller 18. Based on the signals of the sensor 16 indicating that a collision with a pedestrian P is about to occur, the controller 18 ignites the inflator 26 such that the airbag 22 inflates as is shown in Figure 1.

An active ventilation device 30 is provided for venting of the chamber 23 enclosed by the airbag 22. This active ventilation device comprises a vent part 32 attached to the airbag 22. This vent part 32 has an opening 33 which at least overlaps with an opening in the airbag 22. This opening 33 of the vent part is initially closed by a sealing being constituted as a disc-shaped sealing part 60. A pyrotechnically driven actuator 36 is rigidly attached to the vent part 32 and is in electrical communication with the controller 18 such that it can electrically be triggered by the controller 18. As can be seen from Figure 1, the inflator 26 deploys the airbag 22 before a vehicle hits the pedestrian (as is shown here) or directly after the vehicle has hit a pedestrian. During the deployment the opening 33 of the vent part 32 is closed. This helps to deploy the airbag very quickly. A few milliseconds after the start of the deployment of the airbag 22 the pedestrian hits the impact surface 22a of the airbag 22. The exact time can be derived from the vehicle's velocity which can also be inputted to the controller 18. The controller triggers the pyrotechnically driven actuator 36 of the active ventilation device with a certain time offset in relation to the triggering of the inflator 26. The pyrotechnically driven actuator 36 comprises a piston portion 44 which ejects from the housing 38 of the actuator 36 after the actuator 36 has been triggered. This piston portion 44 de-attaches the sealing part 60 from the vent part 32 such that the opening 33 turns open and gas can escape from the chamber of the airbag 22. The timing of the controller is such that the opening is open when the pedestrian hits the impact surface of the airbag 22. The active ventilation device 30 is preferably located remote from the housing and remote from impact surface, for example at the support surface 22b of the airbag 22 that points towards the windscreen 14. One can see from Figure 2 that the gas can escape from the airbag unhindered, especially it does not need to flow back into the direction of the housing 24. This is especially a large advantage, if the inflator 26 is still discharging gas when the pedestrian impacts into the impact surface.

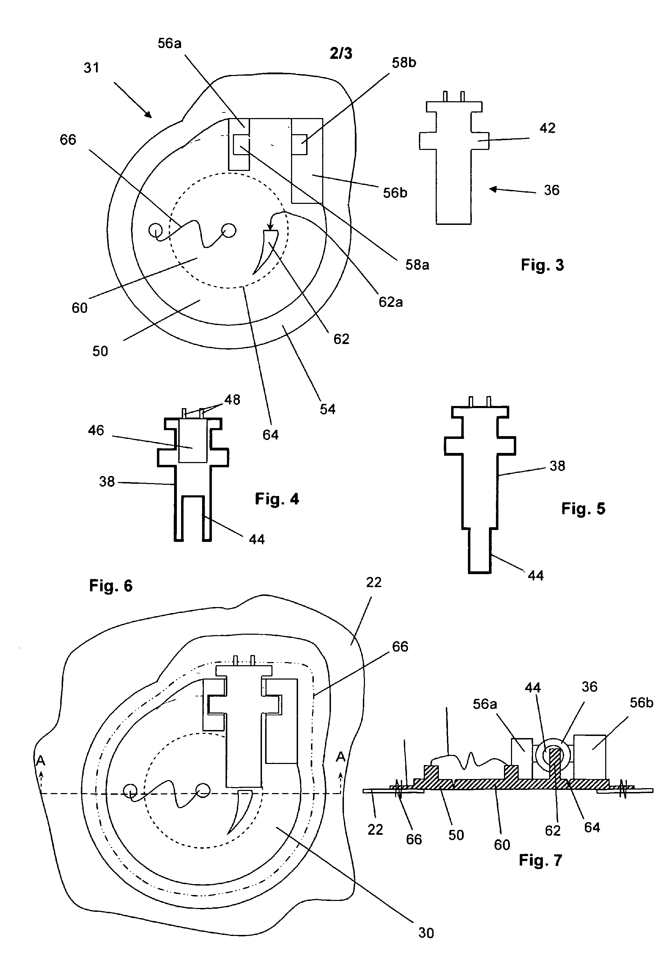

The active ventilation device 30 which is only very roughly shown in Figures 1 and 2 is now described in detail in view of Figures 3 to 8: This active ventilation device 30 is comprised of two separately manufactured elements, namely a one-pieced plastic part 31 and a pyrotechnically driven and electrically triggered actuator 36.

First, the one-pieced plastic part 31 is described in view of Figures 3, 6 and 7. The one-pieced plastic part 31 is constituted of two elements which are initially connected to one another, namely the vent part 32 and the sealing part 60 forming the sealing. The vent part which is permanently attached to the airbag can be looked at as being comprised of four parts, namely a collar 50 encircling the opening 33, a peripheral area 54 encircling the collar 50, and two mounting blocks 56a, 56b comprising mounting means. The disc-shaped sealing part 60 is initially connected to the vent part via a split-line 64 and closes the opening 33.

The collar 50 and the mounting blocks 56a, 56b are rigid, the peripheral area 54 can show some flexibility. For this purpose, the peripheral area 54 has a less thickness than the collar 50. The collar 50 has preferably a thickness between 1 and 15 mm , the peripheral area 54 has basically a thickness of 1 and 5 mm . This makes it especially possible that the vent part 32 is sewn to the airbag 22 via a closed seam 66 being sewn through the peripheral area 54. Alternative methods for attaching the vent part 32 to the airbag 22 would be gluing or welding. Also in these cases the peripheral area 54 can be of advantage but may not be absolutely necessary.

The two mounting blocks 56a, 56b extend from the collar 50 perpendicularly to the plane defined by the opening 33 and the sealing part 60. Both mounting blocks 56a, 56b have a groove 58a, 58b, with the two grooves facing each other. These two grooves serve as mounting means for the actuator.

The sealing part 60 comprises a force transmitter 62 which extends from the disc-shaped main part of the sealing part 60. This force transmitter 62 has a contact surface 62a which points towards the mounting blocks 56a, 56b.

In the embodiment shown a tether 66 is provided between the sealing part 60 and the collar 50. It is basically possible to form this tether 66 also in one part with the one-pieced plastic part, but it might be easier to manufacture this tether 66 separately and glue its ends to the collar and the sealing part respectively. This tether 66 is not shown in Figures 1 and 2.

Now, the pyrotechnically driven actuator 36 is described with reference to Figures 3, 4 and 5. This pyrotechnically driven actuator is comprised of a rigid housing part, a pyrotechnic load 46, located inside this housing part 38 and a piston portion 44, which is in its initial state located inside the housing part 38. Connector pins 48 extend from the pyrotechnic load 46 through the housing part 38. A mounting collar 42 extends radially from the housing part 38. This mounting collar 42 serves as first mounting means.

In the embodiment shown the piston portion 44 and the housing part 38 are formed as a single part. The piston portion 44 initially extends into the housing and is folded outwardly when the pressure inside the housing part 38 rises due to the ignition of the pyrotechnic load 46 (see Figure 5). It would also be possible to provide a "classic" separate piston, but the construction shown in the preferred embodiment has several advantages: First, the piston portion 44 is not solid, which contributes to the low mass of the pyrotechnically driven actuator 36. Second, this pyrotechnically driven actuator 36 is easy to manufacture and third, it is ensured that no gas or other remains from the pyrotechnic load can escape from the pyrotechnically driven actuator 36. The piston part may be manufactured separately from the housing 38 of the actuator and is welded to the same.

The mounting of the pyrotechnically driven actuator 36 to the vent part 32 is very easy: It is just inserted between the two mounting blocks 56a, 56b, such that the mounting collar 42 comes to lie in the grooves 58a, 58b, which form the second mounting means. Additional fastening, for example by means of gluing, may be provided. The direction of mounting is perpendicular to the plane of the opening 33, such that the pyrotechnically driven actuator 36 does not interfere with the force transmitter 62. It is especially possible that the mounting of the pyrotechnically driven actuator 36 to the vent part (this means to the one-piece plastic part 31) takes place after the attaching of the one-pieced plastic part to the airbag. In the mounted state, the piston portion 44 faces the contact surface 62a of the force transmitter 62. It is to be noted that the axial direction of the piston portion 44 is parallel to the plane of the opening 33. It is further to be noted that the force transmitter 62 and thus also the piston portion 44 are offset from the centre of the sealing part 60.

When the pyrotechnic load 46 of the pyrotechnically driven actuator 36 is triggered by an electrical signal from the controller 18 it is ignited and the piston portion 44 shoots out of the housing part 38. By doing so, the piston portion 44 hits contact surface 62a of the force transmitter 62 and the force transmitter 62 transfers applies a torque to the rigid sealing part 60, such that the split-line 64 ruptures and the sealing part is de-attached from the collar 50 and the opening 33 is released. The sealing part 60 remains connected to the collar 50 via the tether 66.

Due to the very flat configuration of the active ventilation device the airbag 22 can basically be folded and stored like an airbag without such an active ventilation device.

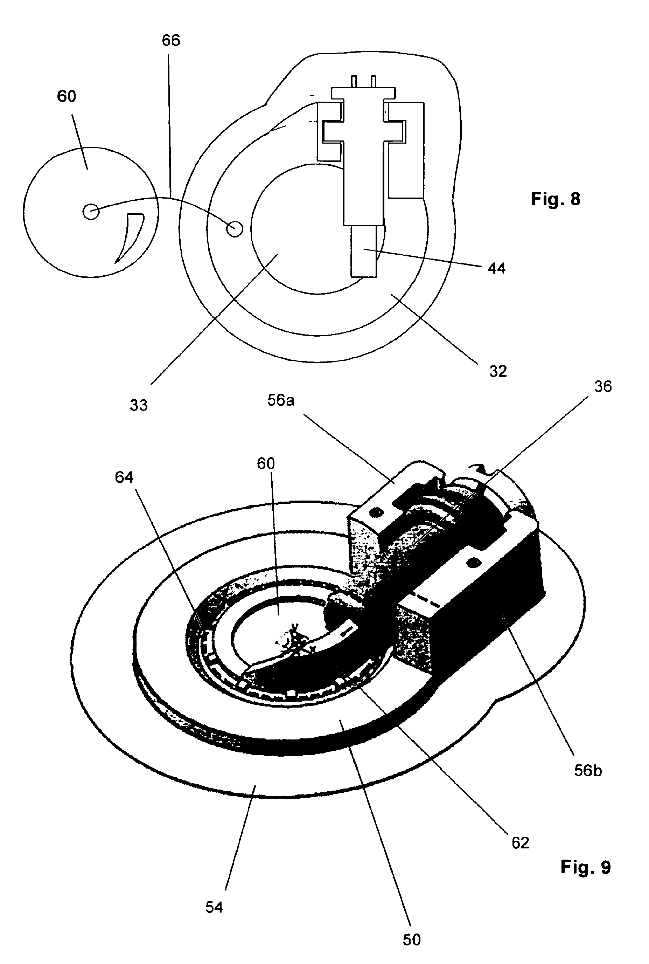

Figure 9 shows basically the same active ventilation device as Figure 6 in a perspective view. The only difference is that no tether 66 is provided.

Although the most preferred application of the described active ventilation device is the use in a pedestrian airbag module, it needs to be emphasized that the use in other types of airbags is also possible.

### List of reference numbers

- 10: Vehicle
- 12: bonnet
- 14: Windscreen
- 16: sensor
- 18: controller
- 20: airbag module
- 22: airbag
- 23: chamber
- 24: housing
- 26: inflator
- 30: active ventilation device
- 31: one-pieced plastic part
- 32: vent part
- 33: opening
- 36: pyrotechnically driven actuator
- 38: housing of the pyrotechnically driven actuator
- 42: mounting collar
- 44: piston portion
- 46: pyrotechnic load
- 48: connector pins
- 50: collar
- 54: peripheral area
- 56a,b: mounting block
- 58a,b: groove
- 60: sealing part
- 62: force transmitter
- 62a: contact surface
- 64: split-line
- 66: tether
- 68a,b: fixation points
- 66: seam

## Claims

1. Airbag module comprising
a flexible airbag (22) enclosing at least one chamber (23) being in fluid connection to an inflator (26) and
an active ventilation device (30) comprising
a vent part (32) with an opening (33),
a sealing which closes the opening in an initial state at least partially, and
an electrically triggered actuator, especially a pyrotechnically driven actuator (36), connected to the vent part (32) that acts on the sealing upon receipt of a signal such that the sealing is at least partially destroyed or removed from the opening (33) so that the active ventilation device (30) comes to an open ventilation state,
**characterised in that** the active ventilation device (30) is mounted to the flexible airbag (22).

2. Airbag module according to claim 1, **characterised in that** the vent part (32) comprises a collar (50) encircling the opening (33), wherein preferably a peripheral area (54) encircling the collar (50) is provided, this peripheral area (54) having a smaller thickness as the collar (50).

3. Airbag module according to claim 2, **characterised in that** the boarder of the sealing is completely de-attached from the collar (50) by the actuator.

4. Airbag module according to claim 3, **characterised in that** a tether (66) extends from the sealing to the vent part or to the pyrotechnically driven actuator.

5. Airbag module according to one of the claims 2 to 4, **characterised in that** the sealing is a sealing part (60) that is formed integrally with the collar (50) in the initial state, such that a one-pieced plastic part (31) is constituted.

6. Airbag module according to one of the preceding claims, **characterised in that** a force transmitter (62) protrudes from the sealing.

7. Airbag module according to one of the preceding claims, **characterised in that** the electrically triggered actuator is a pyrotechnically driven actuator (36) comprising a housing (38), a pyrotechnic load located (46) inside this housing (38) and a piston portion (44) attached to the housing such that on activation of the pyrotechnic load at least a part of the piston portion (44) moves away from the housing in an axial movement.

8. Airbag module according to claim 7, **characterised in that** the piston portion is formed integrally with the housing and extends into the housing in the initial state of the actuator.

9. Airbag module according to claim 7 or claim 8, **characterised in that** the axial movement of the piston portion is basically parallel to the plane defined by the opening.

10. Airbag module according to one of the preceding claims, **characterised in that** the electrically triggered actuator comprises a first mounting means and the vent part comprises a second mounting means matching to the first mounting means, wherein the first and the second mounting means are arranged such that the mounting of the electrically triggered actuator occurs in a direction that is basically perpendicular to the plane defined by the opening.

11. Airbag module according to claim 10, **characterised in that** the first mounting means is a mounting collar (42) extending perpendicularly to the movement direction of the piston portion (44) and the second mounting means is at least one groove (58a, 58b) for receiving the mounting collar.

12. Airbag module according to one of the preceding claims, **characterised in that** the opening (33) is essentially circular and has preferably a diameter between 10 and 80 mm, further preferably a diameter of 40 mm.

13. Airbag module according to one of the preceding claims, **characterised in that** it is a pedestrian airbag module whose airbag inflates at least partially outside the vehicle.

14. Airbag module according to one of the preceding claims, **characterised in that** the active ventilation device is attached to a part of the airbag that points toward a part of the vehicle when the airbag is fully deployed.

15. Airbag module according to one of the preceding claims, **characterised in that** the sealing is removed from the opening within 4 to 10 milliseconds after the pyrotechnically driven actuator received an ignition signal.
